# EUROPÄISCHE PATENTSCHRIFT

(11) **EP 1 082 231 B1**
(45) Veröffentlichungstag und Bekanntmachung des Hinweises auf die Patenterteilung: **02.05.2003**
(21) Anmeldenummer: 99932618.4
(22) Anmeldetag: 04.05.1999
(51) Int. Cl.: B60K 41/00, F02D 29/06

(54) **VERFAHREN UND EINRICHTUNG ZUM STEUERN EINER KRAFTMASCHINE**
METHOD AND DEVICE FOR CONTROLLING A PRIME MOVER
PROCEDE ET DISPOSITIF POUR PILOTER UNE MACHINE MOTRICE

(30) Priorität: 29.05.1998 DE 19824253
(43) Veröffentlichungstag der Anmeldung: 14.03.2001
(73) Patentinhaber: SIEMENS AKTIENGESELLSCHAFT, 80333 München (DE)
(72) Erfinder: FRÖHLICH, Johann, D-84030 Landshut (DE); ZHANG, Hong, D-93057 Regensburg (DE)
(86) Internationale Anmeldenummer: DE9901334
(87) Internationale Veröffentlichungsnummer: WO99062735

(56) Entgegenhaltungen:
- EP-A- 0 788 914
- EP-A- 0 830 969
- DE-A- 4 133 014
- DE-A- 19 612 455
- DE-A- 19 633 194
- PATENT ABSTRACTS OF JAPAN vol. 097, no. 007, 31. Juli 1997 (1997-07-31) & JP 09 084211 A (TOYOTA MOTOR CORP), 28. März 1997 (1997-03-28)

## Beschreibung

Die Erfindung betrifft ein Verfahren gemäß dem Oberbegriff von Patentanspruch 1 und eine Einrichtung gemäß dem Oberbegriff des Patentanspruchs 9.

Ein Verfahren zum Steuern einer Brennkraftmaschine ist aus der DE 196 12 455 A1 bekannt. Ein Sollwert eines Drehmoments wird abhängig von der Fahrpedalstellung eines Fahrpedals, der Drehzahl und weiteren Betriebsgrößen wie dem Luftmassenstrom, der Kühlmitteltemperatur und der Öltemperatur ermittelt. Abhängig von dem Solldrehmoment wird ein Ansteuersignal für einen Drosselklappensteller ermittelt. Das über den Luftmassenstrom einzustellende Drehmoment wird ermittelt unter der Berücksichtigung des Solldrehmoments und Vorhaltewerten des Drehmoments, die von Funktionen zum Steuern der Brennkraftmaschine, wie einer Antriebsschlupfregelung, einer Drehzahlbegrenzung, einer Geschwindigkeitsbegrenzung und einer Katalysator-Heizfunktion, angefordert werden. Ferner ist ein Sollwert des Drehmoments, das schnell einzustellen ist, abhängig von dem Solldrehmoment und Drehmomentanforderungen der weiteren Funktionen zum Steuern der Brennkraftmaschine. Ein Stellsignal für eine Zündkerze ist abhängig von dem Sollwert des Drehmoments. Durch ein Verändern des Zündwinkels kann innerhalb eines Kurbelwellensegments das tatsächlich in einem Zylinder der Brennkraftmaschine erzeugte Drehmoment verändert werden. Die Zeitdauer eines Kurbelwellensegments ist beispielsweise durch den zeitlichen Abstand der Zündungen zweier in der Zündfolge benachbarter Zylinder definiert.

Aufgrund der Trägheit des Ansaugtraktes kann der Sollwert des über den Luftmassenstrom einzustellenden Drehmoments nur langsam eingestellt werden. Weist das tatsächlich von der Brennkraftmaschine zu erzeugende Drehmoment eine hohe Dynamik auf, so müssen die Vorhaltewerte groß gewählt werden, um das Drehmoment mit hoher Güte einzustellen. Dies hat jedoch hohe Abgas-Emissionen der Brennkraftmaschine und einen hohen Kraftstoffverbrauch zur Folge.

Aus der den nächstliegenden Stand der Technik bildenden JP-A-09084211 ist ein weiteres Verfahren zum Steuern einer Kraftmaschine, die eine Brennkraftmaschine umfasst, bekannt. Bei diesem Verfahren wird ein Sollwert eines Drehmoments abhängig von einer den Fahrerwunsch repräsentierenden Größe und Betriebsgrößen der Brennkraftmaschine ermittelt. Stellsignale für Stellglieder der Brennkraftmaschine werden ermittelt abhängig von dem Sollwert des Drehmoments. Ein Schätzwert eines maximalen Drehmoments wird ermittelt, dass über die Stellglieder der Brennkraftmaschine innerhalb einer vorgegebenen Zeitdauer einstellbar ist. Die Ermittlung dieses Schätzwertes erfolgt durch Addieren eines Drehmoment-Erhöhungswertes pro vorgegebener Zeitdauer, zu dem in einem vorangegangenen Berechnungszyklus eingestellten alten Drehmomentwert. Ein Stellsignal für einen Motor-Generator wird dann abhängig von dem Sollwert und dem Schätzwert des maximalen Drehmoments ermittelt.

Die Aufgabe der Erfindung ist es, eine Einrichtung und ein Verfahren zum Steuern einer Kraftmaschine zu schaffen, die/das einen komfortablen und gleichzeitig emissionsarmen Betrieb der Brennkraftmaschine mit einem hohen Wirkungsgrad der Kraftmaschine gewährleistet und präzise ist.

Die Aufgabe wird durch die Merkmale der unabhängigen Patentansprüche gelöst. Die Erfindung zeichnet sich dadurch aus, daß ein Stellsignal für ein Motorgenerator, der auf der Antriebswelle der Brennkraftmaschine angeordnet ist, abhängig von dem Sollwert des Drehmoments ermittelt wird. Der Motor-Generator hat eine Ansprechzeit, die deutlich niedriger ist als die Zeitdauer bis ein Sprung des Sollwertes des Drehmoments über den Luftmassenstrom eingestellt ist. So können die Vorhaltewerte bei dem über den Luftmassenstrom einzustellenden Drehmoment niedriger gewählt werden ohne dabei Komforteinbußen in Kauf nehmen zu müssen.

Die Erfindung zeichnet sich ferner dadurch aus, dass das Stellsignal für das als Zündkerze oder Einspritzventil ausgebildete Stellglied abhängig ist von einem Sollwert des Drehmoments und dem Schätzwert des tatsächlichen Motor-Generator Drehmoments. Dadurch ist eine äußerst präzise Einstellung des Sollwerts des Drehmoments ermöglicht.

Vorteilhafte Ausgestaltungen der Erfindung sind in den Unteransprüchen gekennzeichnet. Ein Ausführungsbeispiel der Erfindung ist im folgenden unter Bezugnahme auf die schematischen Zeichnungen näher erläutert. Es zeigen:
- Figur 1: eine Kraftmaschine mit einer Brennkraftmaschine und einem Motor-Generator,
- Figur 2: a bis c Blockschaltbilder der erfindungsgemäßen Steuerung,
- Figur 3, 4: Signalverläufe aufgetragen über die Zeit t.

Elemente gleicher Konstruktion und Funktion sind figurenübergreifend mit den gleichen Bezugszeichen versehen.

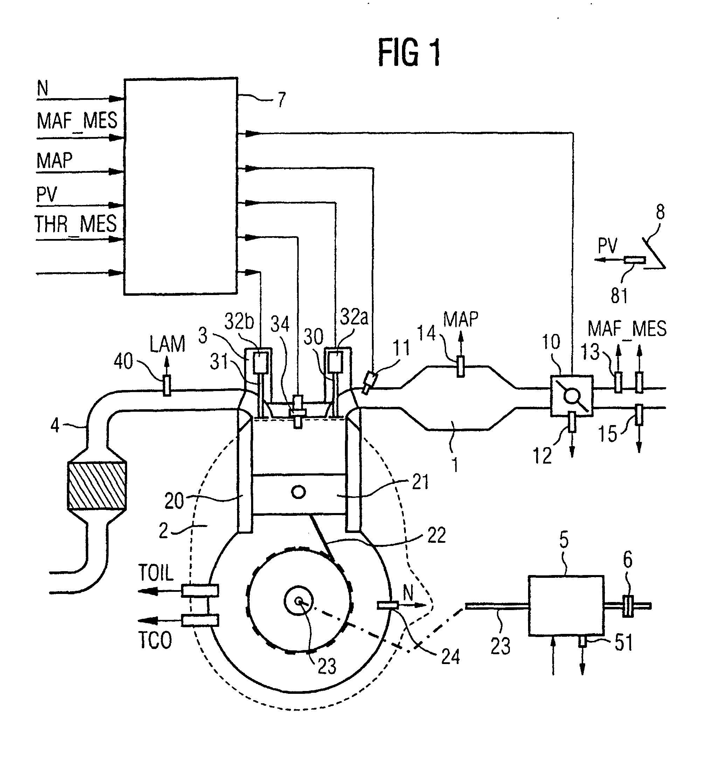

Eine Kraftmaschine (Figur 1) umfaßt eine Brennkraftmaschine. Die Brennkraftmaschine hat einen Ansaugtrakt 1 mit einer Drosselklappe 10 und einem Motorblock 2, der einen Zylinder 20 und eine Kurbelwelle 23 aufweist. Ein Kolben 21 und eine Pleuelstange 22 sind dem Zylinder 20 zugeordnet. Die Pleuelstange 22 ist mit dem Kolben 21 und der Kurbelwelle 23 verbunden.

Ein Zylinderkopf 3 ist vorgesehen, in dem ein Ventiltrieb angeordnet ist mit mindestens einem Einlaßventil 30, einem Auslaßventil 31 und jeweils einem dem Einlaßventil 30 zugeordneten Ventilantrieb 32a und einem dem Auslaßventil 31 zugeordneten Ventilantrieb 32b.

In den Ansaugtrakt 1 ist ein Einspritzventil 11 eingebracht, das so angeordnet ist, daß der Kraftstoff in den Ansaugtrakt 1 zugemessen wird. Das Einspritzventil 11 kann alternativ auch in dem Zylinderkopf 3 eingebracht sein und dort so angeordnet sein, daß der Kraftstoff direkt in den Innenraum des Zylinders 20 zugemessen wird. Eine Zündkerze 34 ist in eine Ausnehmung des Zylinderkopfes 3 eingebracht. Die Brennkraftmaschine ist in der Figur 1 mit einem Zylinder dargestellt. Sie kann jedoch auch mehrere Zylinder umfassen.

Ein Abgastrakt 4 ist der Brennkraftmaschine zugeordnet. Ein Motor-Generator 5 ist vorgesehen, dessen Rotor kraftschlüssig mit der Kurbelwelle 23 verbunden ist. Der Motor-Generator ist vorzugsweise als Asynchron-Maschine ausgebildet. Er kann jedoch auch als Synchron-Maschine oder als Gleichstrommotor ausgebildet sein. Die Kurbelwelle 23 ist im Motorbetrieb die Abtriebswelle des Motor-Generators und im Generatorbetrieb die Antriebswelle des Motor-Generators. Der Motor-Generator 5 ersetzt den Starter und den sonst üblichen Generator einer Brennkraftmaschine. Die Kraftmaschine ist somit wesentlich kompakter.

Die Kurbelwelle 23 ist über eine Kupplung 6 mit einem nicht dargestellten Getriebe koppelbar. Wenn das Getriebe als Automatikgetriebe ausgebildet ist, dann ist die Kupplung 6 beispielsweise als Wandlerüberbrückungskupplung vorzugsweise mit einem hydrodynamischen Wandler ausgebildet.

Eine Steuereinrichtung 7 für die Kraftmaschine ist vorgesehen, der Sensoren zugeordnet sind, die verschiedene Meßgrößen erfassen und jeweils den Meßwert der Meßgröße ermitteln. Die Steuereinrichtung 7 ermittelt abhängig von mindestens einer Betriebsgröße ein oder mehrere Stellsignale, die ein Stellgerät steuern.

Die Sensoren sind ein Pedalstellungsgeber 81, der eine Pedalstellung PV des Fahrpedals 8 erfaßt, ein Drosselklappenstellungsgeber 12, der einen Öffnungsgrad der Drosselklappe erfaßt, ein Luftmassenmesser 13, der einen Luftmassenstrom erfaßt und/oder ein Saugrohrdrucksensor 14, der einen Saugrohrdruck in dem Ansaugtrakt 1 erfaßt, ein erster Temperatursensor 15 der eine Ansauglufttemperatur erfaßt, ein Drehzahlgeber 24, der eine Drehzahl N der Kurbelwelle 23 erfaßt, und ein zweiter und dritter Temperatursensor 26, 27, die eine Öltemperatur TOIL beziehungsweise eine Kühlmitteltemperatur TCO erfassen. Ferner ist eine Meßeinheit 51 vorgesehen, die eine charakteristische Betriebsgröße des Motor-Generators 5 erfaßt. Die charakteristische Betriebsgröße des Motor-Generators 5 kann beispielsweise ein Strom oder eine Spannung oder eine Leistung sein. Der Steuereinrichtung 7 kann eine beliebige Untermenge der genannten Sensoren zugeordnet sein, es können hier aber auch zusätzliche Sensoren zugeordnet sein.

Betriebsgrößen umfassen Meßgrößen sowie von diesen abgeleitete Größen, die über einen Kennfeldzusammenhang oder von einem Beobachter ermittelt werden, der Schätzwerte der Betriebsgrößen berechnet.

Die Stellgeräte umfassen jeweils einen Stellantrieb und ein Stellglied. Der Stellantrieb ist ein elektromotorischer Antrieb, eine elektromagnetischer Antrieb, ein mechanischer oder ein weiterer dem Fachmann bekannter Antrieb. Die Stellglieder sind als Drosselklappe 10, als Einspritzventil 11, als Zündkerze 34 oder als sonstige dem Fachmann bei Brennkraftmaschinen bekannte Stellglieder ausgebildet. Auf die Stellgeräte wird im folgenden mit dem jeweils zugeordneten Stellglied bezug genommen.

Die Steuereinrichtung ist vorzugsweise als elektronische Motorsteuerung ausgebildet. Sie kann jedoch auch mehrere Steuergeräte umfassen, die elektrisch leitend miteinander verbunden sind, so z.B. bei einem Bussystem.

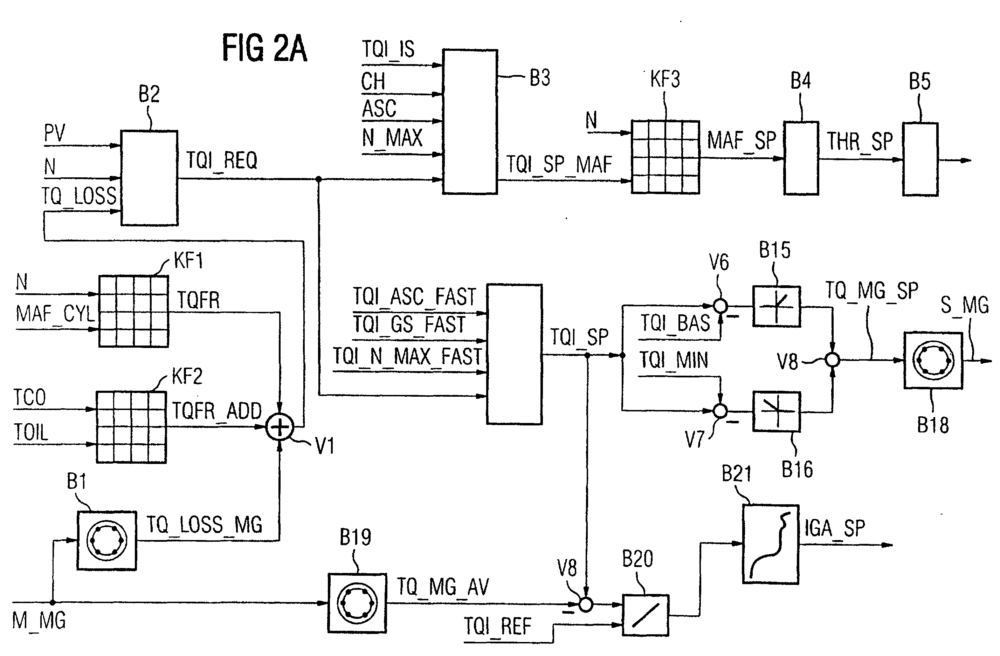

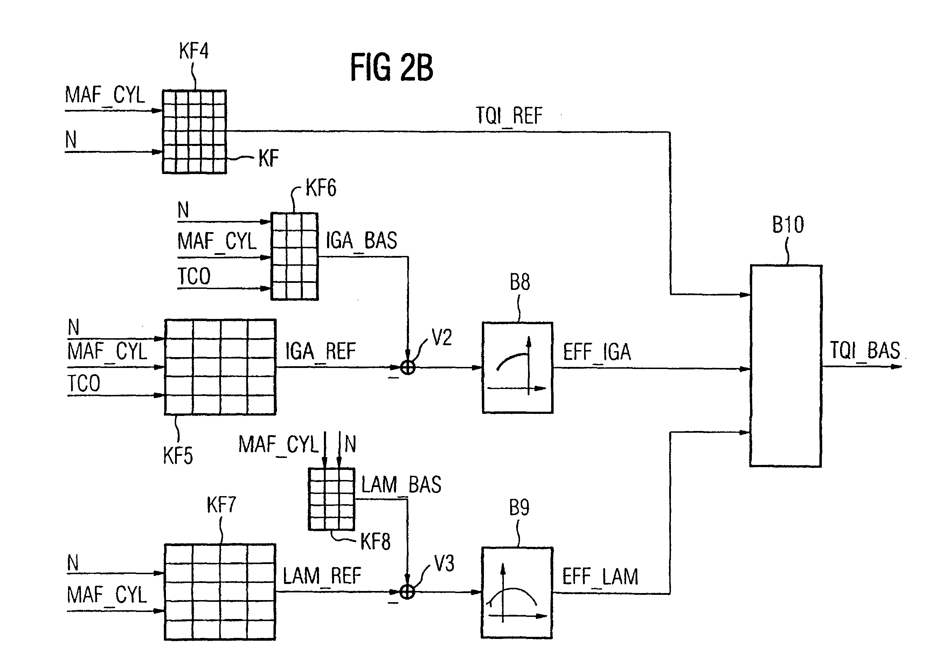

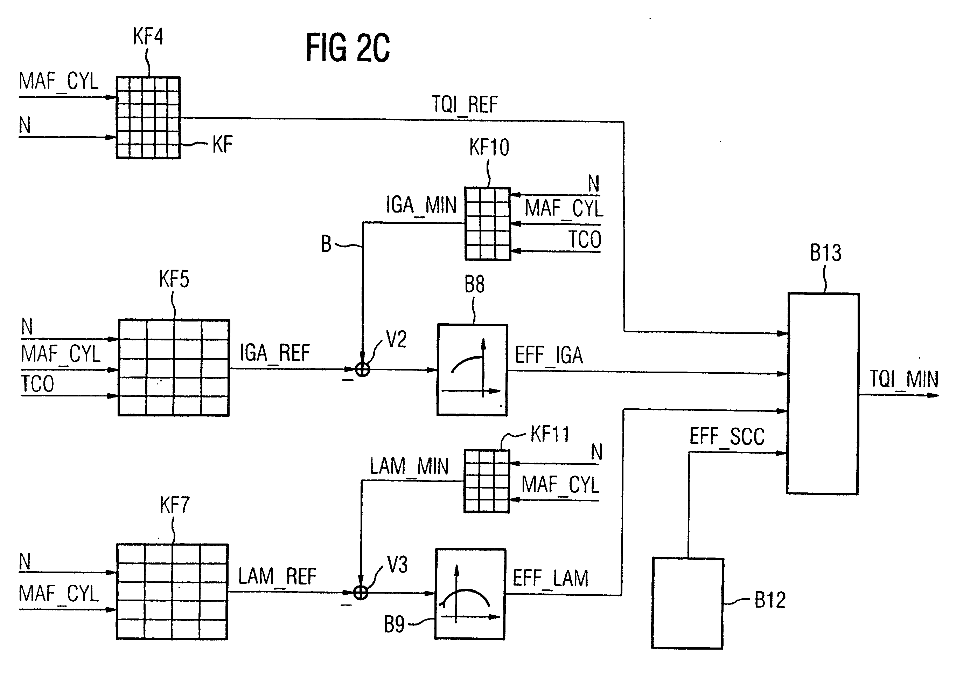

Im folgenden wird die Funktion des erfindungsrelevanten Teils der Steuereinrichtung 7 anhand der Blockschaltbilder der Figuren 2a, 2b, 2c beschrieben. Ein Schätzwert MAF_CYL (siehe Figur 2a) des Luftmassenstrom in den Zylinder 20 wird mit einem Füllungsmodell des Ansaugtraktes 1 abhängig von dem Meßwert MAF_MES des Luftmassenstroms und weiteren Betriebsgrößen berechnet. Ein derartiges Modell ist in der WO 96/32579 offenbart, deren Inhalt hiermit diesbezüglich einbezogen ist.

Ein Kennfeld KF1 ist vorgesehen, aus dem ein erster Beitrag TQFR zu einem Verlustdrehmoment TQ_LOSS abhängig von der Drehzahl N, und dem Schätzwert MAF_CYL des Luftmassenstroms im Zylinder 20 ermittelt wird. Der erste Beitrag TQFR zu dem Verlustdrehmoment TQ_LOSS berücksichtigt Pumpverluste in der Brennkraftmaschine und Verluste, die durch Reibung bei vorgegebenen Referenzwerten der Kühlmitteltemperatur TCO und der Öltemperatur TOIL auftreten.

Ein zweiter Beitrag TQFR_ADD zu dem Verlustdrehmoment TQ_LOSS wird aus einem Kennfeld KF2 abhängig von der Öltemperatur TOIL und/oder der Kühlmitteltemperatur TCO ermittelt. Ferner wird ein dritter Beitrag TQ_LOSS_MG zum Verlustdrehmoment abhängig von dem Meßsignal M_MG, das von der Meßeinheit 51 erzeugt wird, ermittelt. Der dritte Beitrag TQ_LOSS_MG zum Verlustdrehmoment TQ_LOSS wird in einem Block B1 über ein dynamisches Modell der Verluste des Motor-Generators ermittelt. Vorzugsweise umfaßt das dynamische Modell der Verluste des Motor-Generators 5 eine Kennlinie, in der Kennwerte des dritten Beitrags TQ_LOSS_MG abhängig von einem erfaßten Strom durch den Motor-Generator 5 abgelegt sind. Die Kennwerte werden mit einem Korrekturfaktor korrigiert, der abhängt von der Temperatur des Motor-Generators, wobei dieser Korrekturfaktor vorzugsweise einer PD₁-Filterung unterzogen wird. Die Temperatur des Motor-Generators wird entweder direkt ermittelt oder aus einem Kennfeld abhängig von der zu- oder abgeführten Leistung des Motor-Generators ermittelt. Vorzugsweise wird bei der Korrektur des dritten Beitrages TQ_LOSS_MG zum Verlustdrehmoment TQ_LOSS auch die Ansaugtemperatur berücksichtigt. Die Beiträge TQFR, TQFR_ADD, TQ_LOSS_MG werden in einem Verknüpfungspunkt V1 addiert. Ihre Summe bildet dann das Verlustdrehmoment TQ_LOSS.

In einem Block B2 wird ein zur Verfügung stellbarer Drehmomentbereich abhängig von dem Verlustdrehmoment TQ_LOSS und der Drehzahl N ermittelt. Aus der Fahrpedalstellung PV und der Drehzahl N wird ermittelt, welcher Anteil des zur Verfügung stellbaren Drehmomentbereichs von dem Fahrer angefordert wird. Aus dem angeforderten Anteil des Drehmoments und dem zur Verfügung stellbaren Drehmoment wird dann ein dem Fahrerwunsch entsprechender Wert TQI_REQ des Drehmoments ermittelt. Dabei ist vorzugsweise auch eine Filterung des dem Fahrerwunsch entsprechenden Wertes TQI_REQ des Drehmoments vorgesehen, um sicherzustellen, daß keine Lastsprünge auftreten können, die zu einem unangenehmen Ruckeln des Fahrzeugs führen, in dem die Kraftmaschine angeordnet ist.

In einem Block B3 wird ein Sollwert TQI_SP_MAF des über den Luftmassenstrom einzustellenden Drehmoments ermittelt. Dabei werden neben dem Wert TQI_REQ des Drehmoments Vorhaltewerte berücksichtigt. So wird beispielsweise ein Vorhaltewert TQI_IS von einem Leerlaufregler vorgegeben, ein Vorhaltewert TQI_CH von einer Funktion zum Aufheizen eines Katalysators vorgegeben, ein Vorhaltewert TQI_ASC von einer Anti-Schlupfregelung vorgegeben, ein Vorhaltewert TQI_N_MAX von einer Funktion zur Drehzahlbegrenzung vorgegeben, oder ein Vorhaltewert TQI_MSR von einer Motorschleppmomentregelung vorgegeben. Der Sollwert TQI_SP_MAF des über den Luftmassenstrom einzustellenden Drehmoments kann somit größer oder kleiner sein als der Wert TQI_REQ des Drehmoments, der dem Fahrerwunsch entspricht.

Über ein Kennfeld KF3 wird dem Sollwert TQI_SP_MAF des über den Luftmassenstrom einzustellenden Drehmoments abhängig von der Drehzahl N ein Sollwert MAF_SP des Luftmassenstroms zugeordnet. Die Werte des Kennfelds KF3 sind aus Messungen an einem Motorprüfstand bei einer Referenz-Luftzahl LAM_REF und bei einem Referenz-Zündwinkel IGA_REF abgeleitet oder durch eine Simulationsrechnung ermittelt.

In einem Block B4 wird ein Sollwert THR_SP des Öffnungsgrades der Drosselklappe 10 abhängig von dem Sollwert MAF_SP des Luftmassenstroms ermittelt. In einem Block B5 wird ein Stellsignal zum Ansteuern der Drosselklappe 10 ermittelt, vorzugsweise von einem Lageregler der Drosselklappe 10.

Der Sollwert TQI_SP_MAF des über den Luftmassenstrom einzustellenden Drehmoments berücksichtigt vorausschauend das unter der Berücksichtigung der Dynamik des Ansaugtraktes einzustellende Drehmoment.

In einem Block B6 wird ein Sollwert TQI_SP des Drehmoments ermittelt, der innerhalb einer vorgegebenen Zeitdauer einzustellen ist. Die vorgegebene Zeitdauer entspricht vorzugsweise der Zeitdauer, die durch ein Kurbelwellensegment bestimmt ist. Ein Kurbelwellensegment ist bestimmt durch den Winkel zwischen zwei oberen Totpunkten zweier in der Zündfolge benachbarter Zylinder oder auch durch den Zündabstand zweier in der Zündfolge benachbarter Zylinder. Der Sollwert TQI_SP des Drehmoments muß demnach sehr schnell, also z.B. innerhalb eines Arbeitsspiels der Brennkraftmaschine, einstellbar sein.

In einem Block B6 wird der Sollwert TQI_SP des Drehmoments abhängig von dem dem Fahrerwunsch entsprechenden Wert TQI_REQ des Drehmoments und Drehmomentanforderungen TQI_ASC_FAST, TQI_GS_FAST, TQI_N_MAX_FAST einer Anti-Schlupfregelung, einer Getriebesteuerung und einer Funktion zur Begrenzung der Drehzahl N berechnet. Daneben können auch weitere Drehmomentanforderungen berücksichtigt werden.

Das Ermitteln eines Schätzwertes TQI_BAS des maximalen Drehmoments, das innerhalb der vorgegebenen Zeitdauer eingestellt werden kann, wird im folgenden anhand von Figur 2b erläutert. Ein Kennfeld KF4 ist vorgesehen, aus dem abhängig von dem Schätzwert MAF_CYL und der Drehzahl N ein Referenzwert TQI_REF des Drehmoments ermittelt wird. Die Werte des Kennfelds KF4 sind aus Messungen an einem Motorprüfstand bei einer Referenz-Luftzahl LAM_REF und bei einem Referenz-Zündwinkel IGA_REF abgeleitet oder durch eine Simulationsrechnung ermittelt. Der Referenzwert TQI_REF des Drehmoments ist demnach jeweils das Drehmoment, das bei der entsprechenden Drehzahl und dem entsprechenden Luftmassenstrom in den Zylinder maximal theoretisch realisiert werden kann, wenn gleichzeitig der Wirkungsgrad EFF_IGA bezogen auf den Zündwinkel und der Wirkungsgrad EFF_LAM bezogen auf die Luftzahl maximal sind.

In einem Kennfeld KF5 wird der Referenz-Zündwinkel IGA_REF abhängig von der Drehzahl, dem Schätzwert MAF_CYL des Luftmassenstroms im Zylinder 20 und der Kühlmitteltemperatur TCO ermittelt.

In einem Kennfeld KF6 wird ein pareto-optimaler Basis-Zündwinkel IGA_BAS abhängig von der Drehzahl N, dem Schätzwert MAF_CYL des Luftmassenstroms in den Zylinder 20 und der Kühlmitteltemperatur TCO ermittelt.

In einem Verknüpfungspunkt V2 wird die Differenz des Basis-Zündwinkels IGA_BAS und des Referenz-Zündwinkels IGA_REF gebildet. In einem Block B8 wird dann abhängig von dieser Differenz der Wirkungsgrad EFF_IGA des Zündwinkels ermittelt. Der Wirkungsgrad EFF_IGA des Zündwinkels ist normiert auf den Wirkungsgrad des Zündwinkels bei dem Referenz-Zündwinkel IGA_REF.

Die Referenz-Luftzahl LAM_REF wird aus einem Kennfeld KF7 abhängig von der Drehzahl N und dem Schätzwert MAF_CYL des Luftmassenstroms in den Zylinder 20 ermittelt. Eine paretooptimaler Basis-Luftzahl LAM_BAS wird aus einem Kennfeld KF8 abhängig von der Drehzahl N und einem Schätzwert MAF_CYL des Luftmassenstroms in den Zylinder 20 ermittelt. In einem Verknüpfungspunkt V3 wird die Differenz der Basis-Luftzahl LAM_BAS und der Referenz-Luftzahl LAM_REF gebildet und dann im Block B9 der Wirkungsgrad EFF_LAM der Luftzahl normiert auf den Wirkungsgrad bei der Referenz-Luftzahl LAM_REF ermittelt.

In einem Block B10 wird der Schätzwert TQI_BAS des maximalen Drehmoments aus dem Produkt des Referenzwertes TQI_REF des Drehmoments des Wirkungsgrades EFF_IGA des Zündwinkels und des Wirkungsgrades EFF_LAM der Luftzahl ermittelt. Der Schätzwert TQI_BAS des maximalen Drehmoments ist demnach der höchste Wert des Drehmoments, der tatsächlich bei einem gegebenen Schätzwert MAF_CYL des Luftmassenstroms in den Zylinder 20, der Drehzahl N und der Kühlmitteltemperatur durch die Brennkraftmaschine aufgebracht werden kann. Der Basiswert TQI_BAS des Drehmoments ist somit immer kleiner oder gleich dem Referenzwert TQI_REF des Drehmoments.

Zum Ermitteln eines Schätzwertes TQI_MIN (Figur 2c) des minimalen Drehmoments wird im Unterschied zu der Ermittlung des Schätzwertes TQI_BAS des maximalen Drehmoments aus einem Kennfeld KF10 ein Minimal-Zündwinkel IGA_MIN abhängig von der Drehzahl N, dem Schätzwert MAF_CYL und der Kühlmitteltemperatur TCO ermittelt, und dann in dem Verknüpfungspunkt V2 die Differenz des Minimal-Zündwinkels IGA_MIN und des Referenz-Zündwinkels IGA_REF gebildet.

Ferner wird in einem Kennfeld KF11 eine Minimal-Luftzahl LAM_MIN abhängig von der Drehzahl und dem Schätzwert MAF_CYL des Luftmassenstroms in den Zylinder 20 eine Minimal-Luftzahl LAM_MIN ermittelt. In dem Verknüpfungspunkt V3 wird dann die Differenz der Minimal-Luftzahl LAM_MIN und der Referenz-Luftzahl LAM_REF gebildet. Ferner wird in einem Block B12 ein Zylinderabschaltungs-Wirkungsgrad EFF_SCC abhängig von der Anzahl der im Schubbetrieb der Brennkraftmaschine abgeschalteten Zylinder ermittelt.

Der Schätzwert TQI_MIN des minimalen Drehmoments wird dann in dem Block B13 durch Bildung des Produkts aus dem Referenzwert des Drehmoments TQI_REF, des Wirkungsgrades EFF_IGA des Zündwinkels, des Wirkungsgrades EFF_LAM der Luftzahl und des Wirkungsgrades EFF_SCC der Zylinderabschaltung ermittelt. Der Schätzwert TQI_MIN des minimalen Drehmoments ist demnach der niedrigste Wert des Drehmoments, der tatsächlich bei einem gegebenen Schätzwert MAF_CYL des Luftmassenstroms in den Zylinder 20, der Drehzahl N und der Kühlmitteltemperatur durch die Brennkraftmaschine aufgebracht werden kann.

In einer Verknüpfungsstelle V6 (Figur 2a) wird die Differenz des Sollwertes TQI_SP des Drehmoments und des Schätzwertes TQI_BAS des maximalen Drehmomentes ermittelt. In einem Block B15 wird diese Differenz auf einen vorgegebenen unteren Schwellenwert begrenzt. Der untere Schwellenwert kann besonders einfach gleich Null gewählt werden. Er kann ebenso kleiner Null gewählt werden oder auch abhängig von der Temperatur des Motor-Generators oder dem Beladungsgrad einer Spannungsversorgung (Batterie) des Fahrzeugs, in dem die Kraftmaschine angeordnet ist, bestimmt werden. So kann auf einfache Weise die Verfügbarkeit des Motor-Generators, d. h. die Zeit zwischen zwei Ausfällen des Motor-Generators erhöht werden. Ebenso kann so der Ladezustand der Batterie auf einem vorgegebenen vorteilhaften Wert gehalten werden.

In einem Verknüpfungspunkt V7 wird die Differenz des Sollwertes TQI_SP des Drehmoments und des Schätzwertes TQI_MIN des minimalen Drehmoments gebildet. In einem Block B16 erfolgt dann die Begrenzung dieser Differenz auf einen oberen Schwellenwert der entweder den fest vorgegebenen Wert Null oder einen fest vorgegebenen Wert größer Null oder einen Wert hat, der abhängt von der Temperatur des Motor-Generators 5 oder dem Beladungsgrad der Batterie.

In einem Verknüpfungspunkt V8 wird dann die Summe der Ausgangsgrößen der Blöcke B15 und B16 gebildet und einem Sollwert TQ_MG_SP des durch den Motor-Generator 5 aufzubringenden Drehmoments zugeordnet. In einem Block B18 wird dann ein Stellsignal S_MG für den Motor-Generator 5 über ein physikalisches Modell des Motor-Generators abhängig von dem Sollwert TQ_MG_SP des durch den Motor-Generator aufzubringenden Drehmoments, der Temperatur des Motor-Generators 5 und der Drehzahl N erzeugt.

Das physikalische Modell umfaßt beispielsweise eine Kennlinie aus der abhängig von dem Sollwert TQ_MG_SP des durch den Motor-Generator 5 aufzubringenden Drehmoments das Stellsignal S_MG des Motor-Generators ermittelt wird. Das Stellsignal S_MG des Motor-Generators 5 wird dann noch abhängig von einem Korrekturwert multiplikativ korrigiert. Der Korrekturwert wird aus einem Kennfeld abhängig von der Temperatur des Motor-Generators 5 und der Drehzahl N ermittelt und dann einer PD₁-Filertung unterzogen. Ein derartiges Modell beschreibt das dynamische Verhalten des Motor-Generators hinreichend genau.

Mit dem Stellsignal S_MG wird der Motor-Generator 5 angesteuert. Das Stellsignal S_MG kann entweder ein Strom durch die Wicklungen des Motor-Generators 5 oder eine Spannung sein. Der entscheidende Signalparameter ist entweder die Amplitude oder die Frequenz der Spannung oder des Stroms.

In dem Block B19 wird ein Schätzwert TQ_MG_AV des durch den Motor-Generator 5 aufgebrachten Drehmoments über das zu dem in dem Block B18 beschriebene inverse physikalische Modell des Motor-Generators ermittelt. Dabei erfolgt die Ermittlung des Schätzwertes TQ_MG_AV des durch den Motor-Generator aufgebrachten Drehmoments abhängig von dem Meßsignal M_MG des Motor-Generators, das beispielsweise die Spannung oder der Strom durch den Motor-Generator 5 ist.

In einem Verknüpfungspunkt V8 wird die Differenz des Sollwertes TQI_SP des Drehmoments und des Schätzwertes TQ_MG_AV des tatsächlich durch den Motor-Generator aufgebrachten Drehmoments ermittelt. Die in dem Verknüpfungspunkt V8 ermittelte Differenz stellt demnach den Anteil des Sollwertes TQI_SP des Drehmoments dar, der durch den Motor-Generator 5 nicht aufgebracht wird.

In einem Block B20 wird der Quotient, der in dem Verknüpfungspunkt V8 ermittelten Differenz und des Referenzwertes TQI_REF des Drehmoments ermittelt. Der Quotient ist dann Eingangsgröße einer Kennlinie in einem Block B21, aus der ein Sollwert IGA_SP des Zündwinkels ermittelt wird. Die Zündkerze 34 wird dann entsprechend des Sollwertes IGA_SP des Zündwinkels angesteuert.

Die Steuereinrichtung 7 zeichnet sich dadurch aus, daß die Vorhaltewerte TQI_IS, TQI_CH, TQI_ASC und TQI_N_MAX niedrig gewählt werden können, da bei einer tatsächlichen Anforderung dieses Drehmoments, also bei hoher Dynamik des Sollwertes TQI_SP eine schnelle Einstellung zusätzlich über den Motor-Generator 5 erfolgen kann, dessen Ansprechzeit wesentlich niedriger ist als die Ansprechzeit des Ansaugtraktes auf Änderungen der Drosselklappenstellung.

Durch eine geeignete Wahl des oberen und unteren Schwellenwertes in den Blöcken B16 und B17 kann zudem gewährleistet werden, daß auch beim instationären Betrieb der Kraftmaschine ein Drehmomentvorhalt TQI_CH bestehen bleibt, um hohe Abgastemperaturen zum Aufheizen des Katalysators zu gewährleisten. Über den Motor-Generator kann jeweils das über eine Verstellung des Zündwinkels nicht zu erreichende Änderung des Drehmoments erreicht werden. Darüber hinaus erfolgt eine präzise Einstellung des Sollwertes TQI_SP des Drehmoments über das Stellglied Zündkerze 34. Ferner kann bei negativen Sprüngen des Sollwertes TQI_SP ein Aufladen der Batterie des Fahrzeugs erfolgen, statt einer Umwandlung in Verlustwärme.

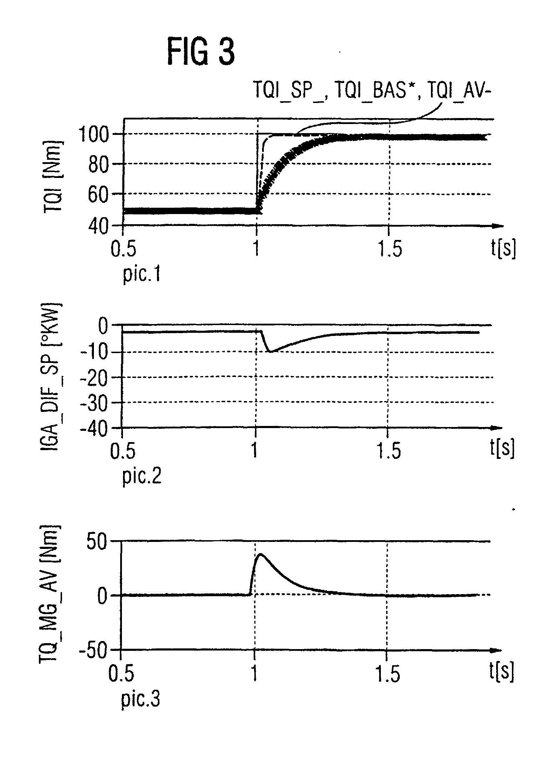

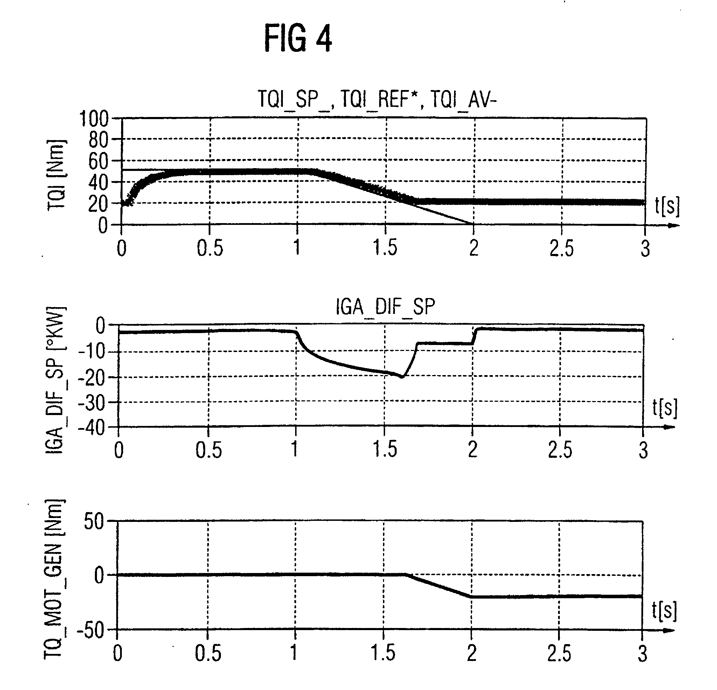

Anhand der Figuren 3 und 4 sind Zeitverläufe des Sollwertes TQI_SP des Drehmoments bei einem positiven Sprung des Sollwertes TQI_SP, des Schätzwertes TQI_BAS des maximalen Drehmoments und eines Schätzwertes eines tatsächlich in der Brennkraftmaschine realisierten Drehmoments, der Differenz des Referenz-Zündwinkels IGA_REF und des Sollwertes IGA_SP des Zündwinkels und des Schätzwertes TQI_MG_AV des tatsächlichen durch den Motor-Generator 5 aufgebrachten Drehmoments aufgetragen über die Zeit t dargestellt. Die gleichen Größen wie in Figur 3 sind auch in Figur 4 aufgetragen über die Zeit t wobei hier der Sollwert TQI_SP des Drehmoments ab dem Zeitpunkt T = 1 s von einem stationären Wert (50 Nm) auf den Wert Null Nm sich verändert. Der Schätzwert TQI_MIN hat in Figur 3 den Wert 20 Nm.

## Patentansprüche

1. Verfahren zum Steuern einer Kraftmaschine, die eine Brennkraftmaschine umfaßt, bei dem
- ein Sollwert (TQI_SP) eines Drehmoments abhängig ist von einer den Fahrerwunsch repräsentierenden Größe und Betriebsgrößen der Brennkraftmaschine,
- Stellsignale für Stellglieder der Brennkraftmaschine abhängig sind von dem Sollwert (TQI_SP) des Drehmoments,
- ein Schätzwert (TQI_BAS, TQI_MIN) eines maximalen oder minimalen Drehmoments ermittelt wird, das über die Stellglieder der Brennkraftmaschine innerhalb einer vorgegebenen Zeitdauer einstellbar ist,
- ein Stellsignal (S_MG) für einen Motor-Generator (5), der auf der Abtriebswelle der Brennkraftmaschine angeordnet ist abhängig ist von dem Sollwert (TQI_SP) und dem Schätzwert (TQI_BAS, TQI_MIN) des maximalen bzw. minimalen Drehmoments,
**dadurch gekennzeichnet, daß**
- ein Schätzwert (TQ_MG_AV) des tatsächlichen Motor-Generator Drehmoments ermittelt wird,
- ein Stellsignal für das als Zündkerze (34) oder Einspritzventil (11) ausgebildete Stellglied abhängig ist von dem Sollwert (TQI_SP) des Drehmoments und dem Schätzwert (TQ_MG_AV) des tatsächlichen Motor-Generator Drehmoments.

2. Verfahren nach Anspruch 1, **dadurch gekennzeichnet, daß** das Stellsignal (S_MG) für den Motor-Generator (5) abhängig ist von der Differenz des Sollwertes (TQI_SP) des Drehmoments und des Schätzwertes (TQI_BAS, TQI_MIN) des maximalen oder minimalen Drehmoments.

3. Verfahren nach einem der Ansprüche 1 oder 2, **dadurch gekennzeichnet, daß** der Motor-Generator (5) als Motor betrieben wird, wenn der Schätzwert (TQI_BAS) des maximalen Drehmoments kleiner ist als der Sollwert (TQI_SP) des Drehmoments.

4. Verfahren nach einem der Ansprüche 1 bis 3, **dadurch gekennzeichnet, daß** der Motor-Generator (5) als Generator betrieben wird, wenn der Schätzwert (TQI_MIN) des minimalen Drehmoments größer ist als der Sollwert (TQI_SP) des Drehmoments.

5. Verfahren nach einem der Ansprüche 1 bis 4, **dadurch gekennzeichnet, daß** der Motor-Generator (5) als Motor betrieben wird, wenn die Differenz des Sollwertes (TQI_SP) des Drehmoments und des Schätzwertes (TQI_BAS) des maximalen Drehmoments größer ist als ein vorgegebener Schwellenwert.

6. Verfahren nach einem der Ansprüche 1 bis 5, **dadurch gekennzeichnet, daß** die vorgegebene Zeitdauer durch die Zeitdauer eines Kurbelwellensegments bestimmt ist.

7. Einrichtung zum Steuern einer Kraftmaschine, die eine Brennkraftmaschine umfaßt, bei der
- Mittel zum Ermitteln eines Sollwertes (TQI_SP) Drehmoments abhängig von einer den Fahrerwunsch repräsentierenden Größe und Betriebsgrößen der Brennkraftmaschine vorgesehen sind,
- Mittel zum Erzeugen von Stellsignalen für Stellglieder der Brennkraftmaschine abhängig von dem Sollwert (TQI_SP) des Drehmoments vorgesehen sind,
- Mittel zum Ermitteln eines Schätzwertes (TQI_BAS, TQI_MIN) eines maximalen oder minimalen Drehmoments vorgesehen sind, das über die Stellglieder der Brennkraftmaschine innerhalb einer vorgegebenen Zeitdauer einstellbar ist,
- Mittel vorgesehen sind zum Erzeugen eines Stellsignals (S_MG) für einen Motor-Generator (5), der auf der Abtriebswelle der Brennkraftmaschine angeordnet ist, wobei das Stellsignal (S_MG) für den Motor-Generator (5) abhängig ist von dem Sollwert (TQI_SP) und dem Schätzwert (TQI_BAS, TQI_MIM) des maximalen bzw. minimalen Drehmoments, und
**dadurch gekennzeichnet, daß**
- Mittel zum Ermitteln eines Schätzwertes (TQ_MG_AV) des tatsächlichen Motor-Generator Drehmoments vorgesehen sind und
- Mittel vorgesehen sind zum Ermitteln eines Stellsignals für das als Zündkerze (34) oder Einspritzventil (11) ausgebildete Stellglied abhängig von dem Sollwert (TQI_SP) des Drehmoments und dem Schätzwert (TQ_MG_AV) des tatsächlichen Motor-Generator Drehmoments.

## Claims

1. Method for controlling a prime mover which comprises an internal combustion engine, whereby
- a required value (TQI_SP) for a torque is dependent on a variable representing the driver's request and on operational variables relating to the internal combustion engine,
- actuating signals for actuators in the internal combustion engine are dependent on the required value (TQI_SP) for the torque,
- an estimated value (TQI_BAS, TQI_MIN) for a maximum or minimum torque is determined, which can be set by way of the actuators in the internal combustion engine within a predefined period of time,
- an actuating signal (S_MG) for a motor-generator set (5), which is located on the output shaft of the internal combustion engine, is dependent on the required value (TQI_SP) and the estimated value (TQI_BAS, TQI_MIN) for the maximum or minimum torque,
**characterised in that**
- an estimated value (TQ_MG_AV) for the actual motor-generator set torque is determined,
- an actuating signal for the actuator which takes the form of a spark plug (34) or injection valve (11) is a function of the required value (TQI_SP) for the torque and the estimated value (TQ_MG_AV) for the actual motor-generator set torque.

2. Method according to Claim 1, **characterised in that** the actuating signal (S_MG) for the motor-generator set (5) is a function of the difference between the required value (TQI_SP) for the torque and the estimated value (TQI_BAS, TQI_MIN) for the maximum or minimum torque.

3. Method according to one of the Claims 1 or 2, **characterised in that** the motor-generator set (5) is operated as a motor when the estimated value (TQI_BAS) for the maximum torque is less than the required value (TQI_SP) for the torque.

4. Method according to one of the Claims 1 to 3, **characterised in that** the motor-generator set (5) is operated as a generator when the estimated value (TQI_MIN) for the minimum torque is greater than the required value (TQI_SP) for the torque.

5. Method according to one of the Claims 1 to 4, **characterised in that** the motor-generator set (5) is operated as a motor when the difference between the required value (TQI_SP) for the torque and the estimated value (TQI_BAS) for the maximum torque is greater than a predefined threshold value.

6. Method according to one of the Claims 1 to 5, **characterised in that** the predefined duration is defined by the duration of a crankshaft segment.

7. Device for controlling a prime mover which comprises an internal combustion engine, whereby
- means are provided for determining a required value (TQI_SP) for a torque as a function of a variable representing the driver's request and of operational variables relating to the internal combustion engine,
- means are provided for generating actuating signals for actuators in the internal combustion engine as a function of the required value (TQI_SP) for the torque,
- means are provided for determining an estimated value (TQI_BAS, TQI_MIN) for a maximum or minimum torque, which can be set by way of the actuators in the internal combustion engine within a predefined period of time,
- means are provided for generating an actuating signal (S_MG) for a motor-generator set (5), which is located on the output shaft of the internal combustion engine, whereby the actuating signal (S_MG) for the motor-generator set (5) is a function of the required value (TQI_SP) and the estimated value (TQI_BAS, TQI_MIN) for the maximum or minimum torque, and
**characterised in that**
- means are provided for determining an estimated value (TQ_MG_AV) for the actual motor-generator set torque and
- means are provided for determining an actuating signal for the actuator which takes the form of a spark plug (34) or injection valve (11) as a function of the required value (TQI_SP) for the torque and the estimated value (TQ_MG_AV) for the actual motor-generator set torque.

## Revendications

1. Procédé permettant de commander une machine motrice comprenant un moteur à combustion interne, dans lequel
- une valeur de consigne (TQI_SP) d'un couple dépend d'une grandeur représentant la sollicitation du conducteur et des grandeurs de fonctionnement du moteur à combustion interne,
- des signaux de commande destinés à des organes de réglage du moteur à combustion interne dépendent de la valeur de consigne (TQI_SP) du couple,
- une valeur estimée (TQI_BAS, TQI_MIN) d'un couple maximal ou minimal est déterminée, lequel est réglable dans une durée prédéfinie au moyen des organes de réglage du moteur à combustion interne,
- un signal de commande (S_MG) pour un moto-générateur (5), lequel est disposé sur l'arbre de sortie du moteur à combustion interne, dépend de la valeur de consigne (TQI_SP) et de la valeur estimée (TQI_BAS, TQI_MIN) du couple maximal respectivement minimal,
**caractérisé en ce que**
- une valeur estimée (TQ_MG_AV) du couple effectif du moto-générateur est déterminée.
- un signal de commande pour l'organe de réglage réalisé sous forme de bougie d'allumage (34) ou d'injecteur (11) dépend de la valeur de consigne (TQI_SP) du couple et de la valeur estimée (TQ_MG_AV) du couple effectif du moto-générateur.

2. Procédé selon la revendication 1, **caractérisé en ce que** le signal de commande (S_MG) pour le moto-générateur (5) dépend de la différence entre la valeur de consigne (TQI_SP) du couple et la valeur estimée (TQI_BAS, TQI_MIN) du couple maximal ou minimal.

3. Procédé selon l'une des revendications 1 ou 2, **caractérisé en ce que** le moto-générateur (5) fonctionne en tant que moteur lorsque la valeur estimée (TQI_BAS) du couple maximal est inférieure à la valeur de consigne (TQI_SP) du couple.

4. Procédé selon l'une des revendications 1 à 3, **caractérisé en ce que** le moto-générateur (5) fonctionne en tant que générateur lorsque la valeur estimée (TQI_MIN) du couple minimal est supérieure à la valeur de consigne (TQI_SP) du couple.

5. Procédé selon l'une des revendications 1 à 4, **caractérisé en ce que** le moto-générateur (5) fonctionne en tant que moteur lorsque la différence entre la valeur de consigne (TQI_SP) du couple et la valeur estimée (TQI_BAS) du couple maximal est supérieure à une valeur de seuil prédéfinie.

6. Procédé selon l'une des revendications 1 à 5, **caractérisé en ce que** la durée prédéfinie est déterminée par la durée d'un segment du vilebrequin.

7. Procédé permettant de commander une machine motrice comprenant un moteur à combustion interne, dans lequel
- des moyens sont prévue pour déterminer une valeur de consigne (TQI_SP) d'un couple en fonction d'une grandeur représentant la sollicitation du conducteur et des grandeurs de fonctionnement du moteur à combustion interne,
- des moyens sont prévus pour générer, en fonction de la valeur de consigne (TQI_SP) du couple, des signaux de commande destinés à des organes de réglage du moteur à combustion interne,
- des moyens sont prévus pour déterminer une valeur estimée (TQI_BAS, TQI_MIN) d'un couple maximal ou minimal, lequel est réglable, dans une durée prédéfinie, au moyen des organes de réglage du moteur à combustion interne,
- des moyens sont prévus pour générer un signal de commande (S_MG) pour un moto-générateur (5), lequel est disposé sur l'arbre de sortie du moteur à combustion interne, le signal de commande (S_MG) pour le moto-générateur (5) dépendant de la valeur de consigne (TQI_SP) et de la valeur estimée (TQI_BAS, TQI_MIN) du couple maximal respectivement minimal,
**caractérisé en ce que**
- des moyens sont prévus pour déterminer une valeur estimée (TQ_MG_AV) du couple effectif du moto-générateur et
- des moyens sont prévus pour déterminer un signal de commande destiné à l'organe de réglage réalisé sous forme de bougie d'allumage (34) ou d'injecteur (11) en fonction de la valeur de consigne (TQI_SP) du couple et de la valeur estimée (TQ_MG_AV) du couple effectif du moto-générateur.
